# EUROPÄISCHE PATENTSCHRIFT

(11) **EP 4 297 986 B1**
(45) Veröffentlichungstag und Bekanntmachung des Hinweises auf die Patenterteilung: **16.10.2024**
(21) Anmeldenummer: 22724796.2
(22) Anmeldetag: 04.05.2022
(51) Int. Cl.: B60K 1/00, F16H 57/02

(54) **ANTRIEBSVORRICHTUNG FÜR EINE FAHRZEUGACHSE**
DRIVE DEVICE FOR A VEHICLE AXLE
DISPOSITIF D'ENTRAÎNEMENT POUR UN ESSIEU DE VÉHICULE

(30) Priorität: 19.05.2021 DE 102021112973
(43) Veröffentlichungstag der Anmeldung: 03.01.2024
(73) Patentinhaber: Audi AG, 85045 Ingolstadt (DE)
(72) Erfinder: GLOEDE, Harald, 85104 Pförring (DE)
(74) Vertreter: Bierschneider, Walter
(86) Internationale Anmeldenummer: PCT/EP2022/062060
(87) Internationale Veröffentlichungsnummer: WO 2022/243041

(56) Entgegenhaltungen:
- EP-A1- 3 446 908
- WO-A1-2016/120472
- CN-A- 112 803 650
- DE-A1- 102018 106 799
- US-A1- 2018 328 480

## Beschreibung

Die Erfindung betrifft eine Antriebsvorrichtung für eine Fahrzeugachse eines zweispurigen Fahrzeugs nach dem Oberbegriff des Anspruches 1 sowie ein Verfahren zum Zusammenbau einer solchen Antriebsvorrichtung nach Anspruch 6.

Eine elektrifizierte Fahrzeugachse für ein zweispuriges Kraftfahrzeug weist eine Elektromaschine auf, die über ein Getriebe sowie über ein Achsdifferenzial auf Abtriebswellen abtreibt, die jeweils zu einem Fahrzeugrad führen.

In einer bekannten Antriebsvorrichtung ist ein zylindrisches Statorgehäuse der Elektromaschine in Axialrichtung mit einem Getriebegehäuse verlängert, die an einer Fügeebene miteinander verschraubt sind. An der Fügeebene geht eine Statorgehäuse-Seite in eine Getriebegehäuse-Seite über. Die Schraubachse an der Schraubstelle ist achsparallel zur Statorgehäuse-Achse ausgerichtet.

In einem nicht von der Erfindung umfassten Vergleichsbeispiel ist die Schraubstelle wie folgt realisiert: Ein Schraubbolzen der Schraubstelle ist durch ein gewindefreies Schraubloch des Statorgehäuses geführt und in Gewindeeingriff mit einer am Getriebegehäuse ausgebildeten Innengewinde-Bohrung, so dass ein Öffnungsrandbereich des Statorgehäuse-Schraubloches zwischen einem Bolzenkopf des Schraubbolzens und dem Getriebegehäuse verspannt ist. Dadurch ergibt sich im Stand der Technik der folgende Zusammenbau-Prozess: So wird zunächst in einem Bereitstellungs-Prozessschritt ein noch leeres Statorgehäuse bereitgestellt und mit Elektromaschinen-Komponenten bestückt. Die Statorgehäuse-Achse ist dabei in Bearbeitungs-Hochrichtung derart ausgerichtet, dass die Fügefläche zur Anbindung an das Getriebegehäuse auf der Statorgehäuse-Oberseite positioniert ist. Anschließend erfolgt ein Umschlag-Prozessschritt, in dem das bestückte Statorgehäuse um 180° umgeschlagen wird. Anschließend wird das umgeschlagene Statorgehäuse in einem Zustell-Prozessschritt in vertikaler Zustellbewegung von oben nach unten auf das Getriebegehäuse gesetzt. Zum Prozessende wird ein Schraub-Prozessschritt durchgeführt, in dem der Schraubbolzen in einer vertikalen Fügerichtung von oben nach unten in die Schraubstelle zwischen Statorgehäuse und Getriebegehäuse eingeschraubt wird.

Im obigen Vergleichsbeispiel befindet sich der Bolzenkopf des Schraubbolzens, das heißt der Werkzeugansatz, auf der Statorgehäuse-Seite (das heißt unmittelbar seitlich neben dem Außenumfang des Statorgehäuses). Ein Werkzeugzugang zum Bolzenkopf ist aufgrund der beengten Raumverhältnisse nur störkonturbehaftet möglich. Zudem ist im Zusammenbau-Prozess ein fertigungstechnisch sowie montagetechnisch aufwendiger Umschlag-Prozessschritt durchzuführen, damit eine hängende Verschraubung, das heißt eine Verschraubung in einer Fügerichtung von unten nach oben, vermieden werden kann.

Eine gattungsgemäße Antriebsvorrichtung für eine Fahrzeugachse ist aus der DE 10 2018 106 799 A1 bekannt.

Aus der DE 10 2015 112 684 A1 ist ein Aktuator zum Ankoppeln an die Verstellwelle eines Verbrennungsmotors zum Einstellen des Expansionshubes bekannt. Aus der DE 10 2019 133 843 A1 ist eine elektrische Antriebseinheit für Fahrzeuge bekannt. Aus der DE 43 42 185 A1 ist ein Getriebe bekannt. Die Aufgabe der Erfindung besteht darin, eine Antriebsvorrichtung für eine Fahrzeugachse bereitzustellen, bei der ein Zusammenbau-Prozess im Vergleich zum Stand der Technik vereinfacht ist.

Die Aufgabe ist durch die Merkmale des Anspruches 1 oder des Anspruches 6 gelöst. Bevorzugte Weiterbildungen der Erfindung sind in den Unteransprüchen offenbart.

Die Erfindung geht von einer Antriebsvorrichtung für eine Fahrzeugachse aus, bei der eine Elektromaschine über ein Getriebe auf Abtriebswellen abtreibt, die jeweils zu einem Fahrzeugrad führen. In der Antriebsvorrichtung ist ein zylindrisches Statorgehäuse der Elektromaschine in Axialrichtung mit einem Getriebegehäuse verlängert. Das Statorgehäuse und das Getriebegehäuse sind an einer Fügeebene miteinander verschraubt, an der eine Statorgehäuse-Seite in eine Getriebegehäuse-Seite übergeht. Dabei weist die zumindest eine Schraubstelle zwischen dem Getriebegehäuse und dem Statorgehäuse einen Schraubbolzen auf, der durch ein gewindefreies Schraubloch des Getriebegehäuses geführt ist und in Gewindeeingriff mit einer am Statorgehäuse ausgebildeten Innengewinde-Bohrung ist. Auf diese Weise kann ein Öffnungsrandbereich des Getriebegehäuses-Schraubloches zwischen einem Bolzenkopf des Schraubbolzens und dem Statorgehäuse verspannt sein.

Dabei befindet sich der, einen Werkzeugansatz bildende Schraubbolzen-Bolzenkopf nicht mehr auf der störkonturbehafteten Statorgehäuse-Seite, sondern vielmehr auf der Getriebegehäuse-Seite. Der Werkzeugzugang zum Schraubbolzen erfolgt daher störkonturfrei auf der Getriebegehäuse-Seite.

Erfindungsgemäß mündet das gewindefreie Schraubloch des Getriebegehäuses in den Getriebegehäuse-Innenraum. Auf diese Weise ist der Bolzenkopf des Schraubbolzens im Zusammenbauzustand im Getriebegehäuse-Innenraum positioniert und daher vor getriebeäußeren Einflüssen geschützt.

In einer konkreten Ausführungsvariante kann das Getriebegehäuse aus zwei Gehäuseteilen aufgebaut sein, die in einer Axialrichtung hintereinander angeordnet sind. Die beiden Gehäuseteile können ein Zwischengehäuse und ein Gehäusedeckel sein. Das Zwischengehäuse wird unmittelbar mit dem Statorgehäuse verschraubt, während der Gehäusedeckel am Zwischengehäuse verschraubt wird und den Getriebegehäuse-Innenraum in Axialrichtung schließt.

Das Zwischengehäuse und der Gehäusedeckel können an zumindest einer zweiten Schraubstelle miteinander verschraubt sein. Diese kann ebenfalls einen Schraubbolzen aufweisen, der durch ein gewindefreies Schraubloch des Gehäusedeckels geführt ist und in Gewindeeingriff mit einer am Zwischengehäuse ausgebildeten Innengewinde-Bohrung ist. Auf diese Weise wird ein Öffnungsrandbereich des Gehäusedeckel-Schraubloches zwischen einem Schraubbolzen-Bolzenkopf und dem Zwischengewinde verspannt.

Im Hinblick auf eine automatisierte Serienfertigung ist es bevorzugt, wenn die Fügerichtung des Schraubbolzens an der ersten Schraubstelle und des Schraubbolzens an der zweiten Schraubstelle zueinander identisch sind. Die Innengewinde-Bohrung an der ersten Schraubstelle und/oder an der zweiten Schraubstelle kann bevorzugt als ein Sackloch mit geschlossenem Bohrgrund ausgebildet sein. Zudem können die Schraubachsen der ersten Schraubstelle und/oder der zweiten Schraubstelle achsparallel zur Statorgehäuse-Achse ausgerichtet sein.

Mit der Erfindung ist der nachfolgend beschriebene Zusammenbau-Prozess durchführbar: So wird zunächst in einem Bereitstellungs-Prozessschritt ein noch leeres Statorgehäuse bereitgestellt und mit Elektromaschinenkomponenten bestückt. Die Statorgehäuse-Achse ist dabei in einer Bearbeitungs-Hochrichtung ausgerichtet, und zwar so, dass die Fügefläche zur Anbindung an das Getriebegehäuse (insbesondere an das Zwischengehäuse) auf der Statorgehäuse-Oberseite positioniert ist. Anschließend erfolgt ein Zustellschritt, in dem in einer vertikalen Zustellbewegung das Getriebegehäuse (insbesondere das Zwischengehäuse) von oben nach unten auf die Statorgehäuse-Fügefläche gesetzt wird. Zum Prozessende wird ein Schraub-Prozess durchgeführt, in dem der Schraubbolzen in einer vertikalen Fügerichtung von oben nach unten in die Schraubstelle zwischen Statorgehäuse und Getriebegehäuse (insbesondere Zwischengehäuse) eingeschraubt wird.

Anschließend kann ein zweiter Zustellschritt erfolgen, in dem in einer vertikalen Zustellbewegung der Gehäusedeckel von oben nach unten auf eine korrespondierende Zwischengehäuse-Fügefläche gesetzt wird. In einem anschließenden Schraub-Prozessschritt wird ein Schraubbolzen in einer vertikalen Fügerichtung von oben nach unten in die Schraubstelle zwischen Gehäusedeckel und Zwischengehäuse eingeschraubt.

Bevorzugt ist daher im Vergleich zum Stand der Technik kein Umschlag-Prozessschritt mehr erforderlich, um eine hängende Verschraubung, das heißt eine Verschraubung in Fügerichtung von unten nach oben zu vermeiden.

Nachfolgend ist ein Ausführungsbeispiel der Erfindung anhand der beigefügten Figuren beschrieben.

Es zeigen:
- Fig. 1: in einer schematischen Darstellung eine elektrifizierte Fahrzeugachse;
- Fig. 2: eine zusammengebaute Antriebsvorrichtung für die Fahrzeugachse;
- Fig. 3: in einer Detailansicht die Gehäuse-Verschraubungen in der Antriebsvorrichtung;
- Fig. 4 und 5: jeweils Ansichten, die einen Zusammenbau-Prozess veranschaulichen;
- Fig. 6: in einer Ansicht entsprechend der Fig. 3 ein Vergleichsbeispiel.

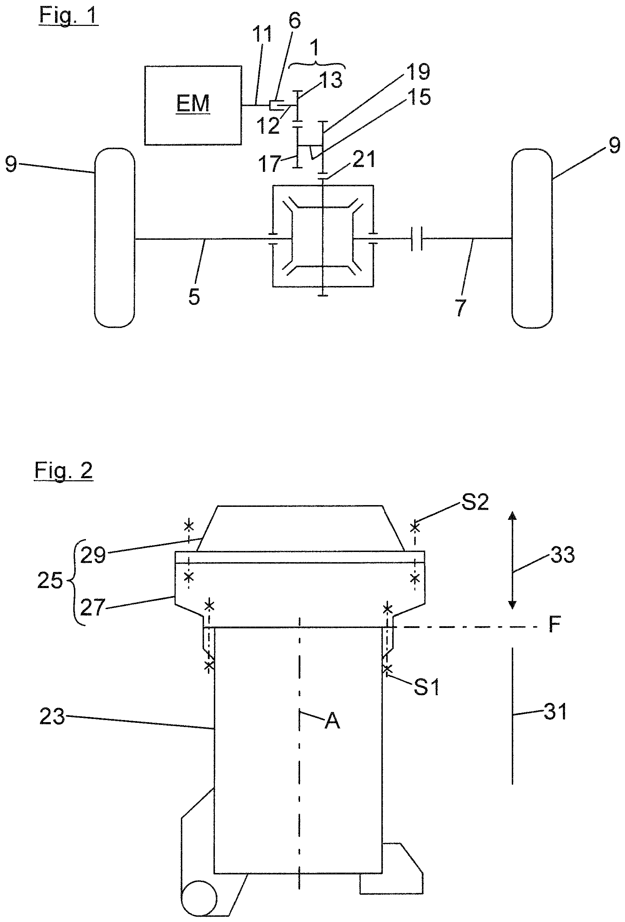

In der Figur 1 ist eine elektrifizierte Fahrzeugachse gezeigt, die mit einer Elektromaschine EM ausgestattet ist. Die Elektromaschine EM ist über ein zweistufiges Vorgelege 1 mit einem Achsdifferenzial 3 trieblich verbunden, von dem rechte und linke Abtriebswellen 5, 7 zu Vorderrädern 9 der Fahrzeugachse geführt sind. Die Rotorwelle 11 der Elektromaschine EM ist über eine angedeutete momentenübertragende Kopplung 6 (zum Beispiel, eine Passverzahnung) mit einer Getriebeeingangswelle 12 koaxial verbunden. Auf der Getriebeeingangswelle 12 sitzt ein Festzahnrad 13, das Bestandteil eines Vorgeleges 1 ist. Das Festzahnrad 13 der Getriebeeingangswelle 12 kämmt mit einem auf einer Zwischenwelle 15 sitzenden Festzahnrad 17. Ein weiteres Festzahnrad 19 der Zwischenwelle 15 kämmt mit einem eingangsseitigen Außenzahnrad 21 des Vorderachsdifferenzials 3. Die Elektromaschine EM ist achsparallel zu den beiden Abtriebswellen 5, 7 ausgerichtet.

Wie aus der Figur 2 hervorgeht, weist die Elektromaschine EM ein zylindrisches Statorgehäuse 23 auf, das in der Axialrichtung mit einem Getriebegehäuse 25 verlängert ist. Im Getriebegehäuse 25 sind sowohl das Vorgelege 1 als auch das Achsdifferenzial 3 angeordnet. Das Getriebegehäuse 25 ist in der Figur 2 zweiteilig aufgebaut, und zwar aus einem Zwischengehäuse 27 und einem Gehäusedeckel 29. Das Zwischengehäuse 27 und das Statorgehäuse 23 sind über erste Schraubstellen S1 an einer Fügeebene F miteinander verschraubt, an der (in Axialrichtung betrachtet) eine Statorgehäuse-Seite 31 in eine Getriebegehäuse-Seite 33 übergeht. In gleicher Weise sind das Zwischengehäuse 27 und der Gehäusedeckel 29 an zweiten Schraubstellen S2 miteinander verschraubt.

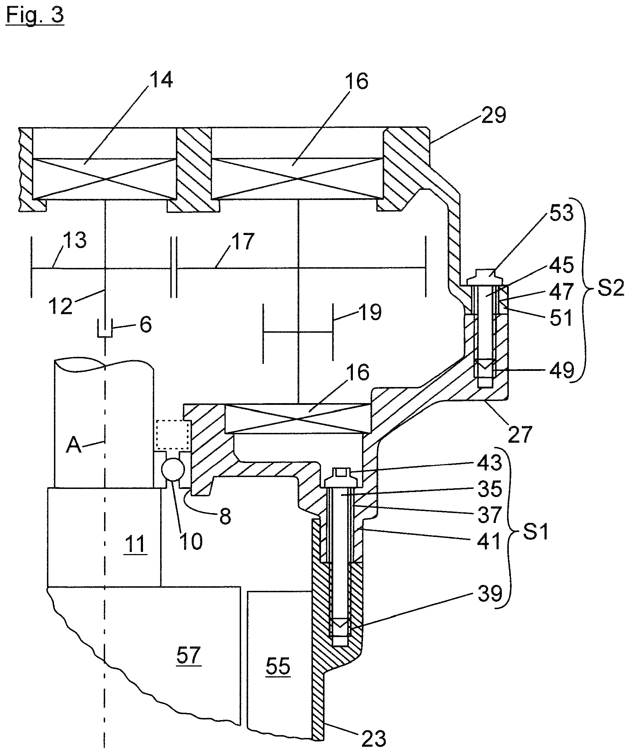

Gemäß der Figur 3 ist ein Wellenende der Getriebeeingangswelle 12 über ein Drehlager 14 im Gehäusedeckel 29 gelagert. Die Zwischenwelle 15 ist über weitere Drehlager 16 sowohl im Gehäusedeckel 29 als auch im Zwischengehäuse 27 drehgelagert. Die Rotorwelle 11 ist über ein Drehlager 10 in einer Lageröffnung 8 des Zwischengehäuses 27 drehgelagert.

In der in der Figur 3 gezeigten ersten Schraubstelle S1 ist ein Schraubbolzen 35 durch ein gewindefreies Schraubloch 37 des Zwischengehäuses 27 geführt und in Gewindeeingriff mit einer am Statorgehäuse 23 ausgebildeten Innengewinde-Bohrung 39. Ein Öffnungsrandbereich 41 des Getriebegehäuse-Schraubloches 37 ist daher zwischen einem Bolzenkopf 43 des Schraubbolzens 35 und dem Statorgehäuse 23 verspannt.

In der in der Figur 3 gezeigten zweiten Schraubstelle S2 ist ein Schraubbolzen 45 durch ein gewindefreies Schraubloch 47 des Gehäusedeckels 29 geführt und in Gewindeeingriff mit einer am Zwischengehäuse 27 ausgebildeten Innengewinde-Bohrung 49. Ein Öffnungsrandbereich 51 des Gehäusedeckel-Schraubloches 47 ist zwischen dem Bolzenkopf 53 des Schraubbolzens 45 und dem Zwischengehäuse 27 verspannt.

Wie aus der Figur 3 weiter hervorgeht, sind die Innengewinde-Bohrungen 39, 49 als Sacklöcher mit jeweils geschlossenem Bohrungsgrund ausgebildet. Die Schraubachsen der beiden Schraubstellen S1, S2 sind achsparallel zur Statorgehäuse-Achse A ausgerichtet. Zudem sind die Fügerichtungen der beiden Schraubbolzen 35, 45 identisch, das heißt in der dargestellten Bearbeitungsposition von oben nach unten.

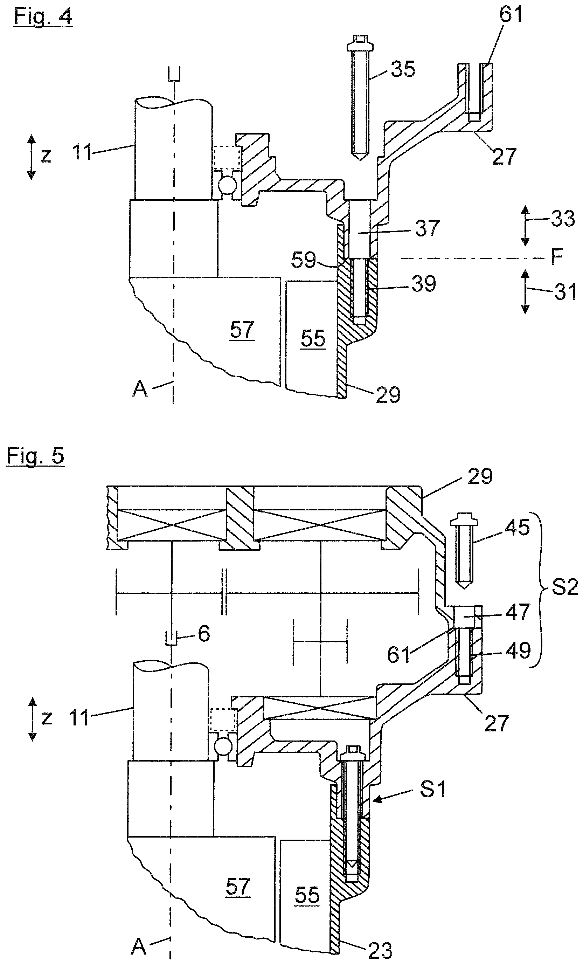

Nachfolgend wird anhand der Figuren 4 und 5 ein Zusammenbau-Prozess beschrieben, bei dem das Statorgehäuse 23, das Zwischengehäuse 27 und der Gehäusedeckel 29 in einer nicht gezeigten Bearbeitungsstation zusammengebaut werden: So wird in einem (nicht dargestellten) Bereitstellungs-Prozessschritt das noch leere Statorgehäuse 23 bereitgestellt und mit Elektromaschinen-Komponenten (zum Beispiel einem Stator 55 und einem Rotor 57) bestückt. Im Bereitstellungs-Prozessschritt befindet sich das Statorgehäuse 23 in einer Bearbeitungsposition, in der die Statorgehäuse-Achse A in der Bearbeitungs-Hochrichtung z (Figuren 4 und 5) ausgerichtet ist. Die Fügeflächen 59 (Figur 4) zur Anbindung an das Zwischengehäuse 27 sind daher auf der Statorgehäuse-Oberseite positioniert.

Anschließend erfolgt ein Zustell-Prozessschritt, in dem in einer vertikalen Zustellbewegung das Zwischengehäuse 27 von oben nach unten auf die Statorgehäuse-Fügeflächen 59 gesetzt wird. In einem abschließenden Schraub-Prozessschritt (Figur 4) wird der Schraubbolzen 35 in einer vertikalen Fügerichtung von oben nach unten in die Schraubstelle S1 zwischen Statorgehäuse 23 und Zwischengehäuse 27 eingeschraubt.

In einem zweiten Zustellschritt wird in einer vertikalen Zustellbewegung der Gehäusedeckel 29 von oben nach unten auf eine Zwischengehäuse-Fügefläche 61 (Figur 4 oder 5) gesetzt. Im folgenden Schraub-Prozessschritt (Figur 5) wird der Schraubbolzen 45 in einer vertikalen Fügerichtung von oben nach unten in die zweite Schraubstelle S2 zwischen Zwischengehäuse 27 und Gehäusedeckel 29 eingeschraubt.

Die Fügerichtungen der beiden Schraubbolzen 35, 37 an der ersten Schraubstelle S1 und an der zweiten Schraubstelle S1, S2 sind identisch. Ein Kern der Erfindung besteht darin, dass sich der Bolzenkopf 43 des Schraubbolzens 35 auf der Getriebegehäuse-Seite 33 befindet. Dadurch kann ein Werkzeugzugang zum Bolzenkopf 43 des Schraubbolzens 35 auf der Getriebegehäuse-Seite 33 störkonturfrei erfolgen. Zudem ist der Bolzenkopf 43 des Schraubbolzens 35 im Gehäuse-Inneren angeordnet.

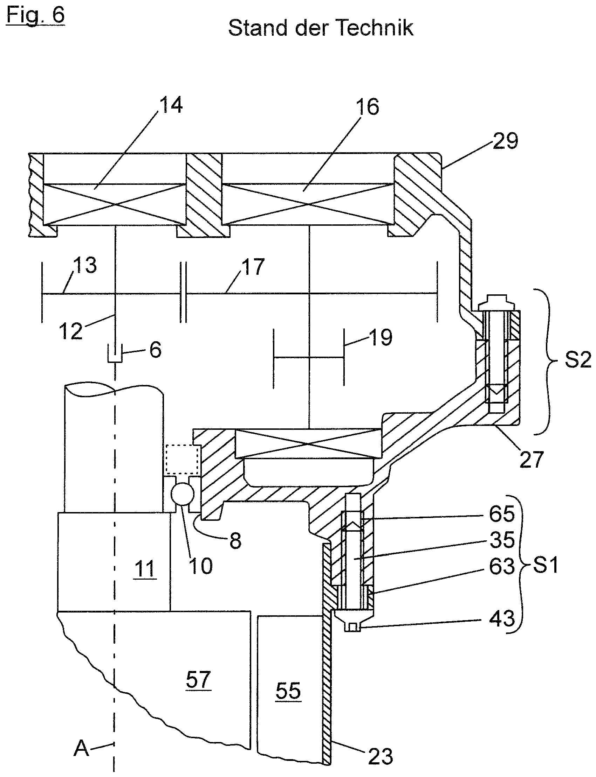

Ein solcher störkonturfreier Werkzeugzugang zum Schraubbolzen 35 der ersten Schraubstelle S1 ist dagegen in dem, in der Figur 6 gezeigten Vergleichsbeispiel nicht möglich: In der Figur 6 ist der Schraubbolzen 35 (von unten nach oben) durch ein gewindefreies Schraubloch 63 des Statorgehäuses 23 geführt und in Gewindeeingriff mit einer am Zwischengehäuse 27 ausgebildeten Innengewinde-Bohrung 65. Ein Öffnungsrandbereich des gewindefreien Schraubloches 63 ist zwischen dem Bolzenkopf 43 des Schraubbolzens 35 und dem Zwischengehäuse 27 verspannt. Der Werkzeugansatz am Bolzenkopf 43 des Schraubbolzens 35 befindet sich in der Figur 6 nicht auf der Getriebegehäuse-Seite 33, sondern auf der Statorgehäuse-Seite 31, und zwar unmittelbar seitlich neben dem Außenumfang des Statorgehäuses 23. Aufgrund der beengten Bauraumverhältnisse ist lediglich ein störkonturbehafteter Werkzeugzugang zum Bolzenkopf 43 des Schraubbolzens 35 ermöglicht, bei dem der Statorgehäuse-Außenumfang eine, einen einfachen Werkzeugzugang entgegenstehende Störkontur bildet. Zudem erfolgt vor Durchführung des Schraub-Prozessschrittes ein zusätzlicher Umschlag-Prozessschritt, in dem das Statorgehäuse 23 um 180° umgeschlagen wird. In einem anschließenden Zustell-Prozessschritt wird das umgeschlagene Statorgehäuse 23 auf dem Zwischengehäuse 27 angeordnet und dort in einem Schraub-Prozessschritt verschraubt. Der Umschlag-Prozessschritt ist erforderlich, um eine hängende Verschraubung, das heißt eine Verschraubung des Statorgehäuses 23 in einer Fügerichtung von unten nach oben zu vermeiden.

### BEZUGSZEICHENLISTE:

- 1: Vorgelege
- 3: Achsdifferenzial
- 6: momentenübertragende Kopplung
- 5, 7: Abtriebswellen
- 8: Lageröffnung
- 9: Fahrzeugräder
- 10: Drehlager
- 11: Rotorwelle
- 12: Getriebeeingangswelle
- 13: Festzahnrad
- 14: Drehlager
- 15: Zwischenwelle
- 16: weitere Drehlager
- 17, 19: Festzahnräder
- 21: Außenzahnrad
- 23: Statorgehäuse
- 25: Getriebegehäuse
- 27: Zwischengehäuse
- 29: Gehäusedeckel
- 31: Statorgehäuse-Seite
- 33: Getriebegehäuse-Seite
- 35: Schraubbolzen
- 37: gewindefreies Schraubloch
- 39: Innengewinde-Bohrung
- 41: Öffnungsrandbereich
- 43: Bolzenkopf
- 45: Schraubbolzen
- 47: gewindefreies Schraubloch
- 49: Innengewinde-Bohrung
- 51: Öffnungsrandbereich
- 53: Bolzenkopf
- 55: Stator
- 57: Rotor
- 59: Fügeflächen
- 61: Fügeflächen
- F: Fügeebene
- S1: erste Schraubstelle
- S2: zweite Schraubstelle
- A: Statorgehäuse-Achse
- EM: Elektromaschine

## Patentansprüche

1. Antriebsvorrichtung für eine Fahrzeugachse eines Fahrzeugs, mit einer Elektromaschine (EM), die über ein Getriebe (1, 3) auf Abtriebswellen (5, 7) abtreibt, die jeweils zu einem Fahrzeugrad (9) führen, wobei ein zylindrisches Statorgehäuse (23) der Elektromaschine (EM) in Axialrichtung mit einem Getriebegehäuse (25) verlängert ist, wobei zumindest eine Schraubstelle (S1) zwischen dem Statorgehäuse (23) und dem Getriebegehäuse (25) einen Schraubbolzen (35) aufweist, der durch ein gewindefreies Schraubloch (37) des Getriebegehäuses (25) geführt ist und in Gewindeeingriff mit einer am Statorgehäuse (23) ausgebildeten Innengewinde-Bohrung (39) ist, **dadurch gekennzeichnet, dass** das gewindefreie Schraubloch (37) des Getriebegehäuses (25) in den Getriebegehäuse-Innenraum mündet, so dass im Zusammenbauzustand der Bolzenkopf (43) des Schraubbolzens (35) im Getriebegehäuse-Innenraum angeordnet ist.

2. Antriebsvorrichtung nach Anspruch 1, **dadurch gekennzeichnet, dass** das Statorgehäuse (23) und das Getriebegehäuse (25) an einer Fügeebene (F) miteinander verschraubt sind, an der eine Statorgehäuse-Seite (31) in eine Getriebegehäuse-Seite (33) übergeht, und dass insbesondere der Bolzenkopf (43) des Schraubbolzens (35) einen Werkzeugansatz aufweist, der sich auf der Getriebegehäuse-Seite (33) befindet, so dass ein Werkzeugzugang zum Schraubbolzen (35) auf der Getriebegehäuse-Seite (33) liegt.

3. Antriebsvorrichtung nach einem der vorhergehenden Ansprüche,
**dadurch gekennzeichnet, dass** das Getriebegehäuse (25) aus zwei Gehäuseteilen (27, 29) aufgebaut ist, die in einer Axialrichtung hintereinander angeordnet sind, und zwar insbesondere aus einem Zwischengehäuse (27) und einem Gehäusedeckel (29), der den Getriebegehäuse-Innenraum in Axialrichtung schließt.

4. Antriebsvorrichtung nach Anspruch 3, **dadurch gekennzeichnet, dass** das Zwischengehäuse (27) und der Gehäusedeckel (29) an zumindest einer zweiten Schraubstelle (S2) miteinander verschraubt sind, und dass die zweite Schraubstelle (S2) einen Schraubbolzen (45) aufweist, der durch ein gewindefreies Schraubloch (47) des Gehäusedeckels (29) geführt ist und in Gewindeeingriff mit einer am Zwischengehäuse (27) ausgebildeten Innengewinde-Bohrung (49) ist, so dass insbesondere ein Öffnungsrandbereich (51) des Gehäusedeckel-Schraubloches (47) zwischen einem Bolzenkopf (53) des Schraubbolzens (45) und dem Zwischengehäuse (27) verspannt ist.

5. Antriebsvorrichtung nach einem der vorhergehenden Ansprüche,
**dadurch gekennzeichnet, dass** die Innengewinde-Bohrung (39, 49) als ein Sackloch mit geschlossenem Bohrungsgrund ausgebildet ist, und/oder dass die Schraubachse der ersten Schraubstelle (S1) und/oder die Schraubachse der zweiten Schraubstelle (S2) achsparallel zur Statorgehäuse-Achse (A) ausgerichtet sind, und/oder dass die Fügerichtung des Schraubbolzens (35) an der ersten Schraubstelle (S1) und des Schraubbolzens (45) an der zweiten Schraubstelle (S2) identisch sind.

6. Verfahren zum Zusammenbau einer Antriebsvorrichtung nach einem der vorhergehenden Ansprüche, mit
- einem Bereitstellungs-Prozessschritt, in dem das noch leere Statorgehäuse (23) bereitgestellt wird und mit Elektromaschinen-Komponenten (55, 57) bestückt wird, wobei die Statorgehäuse-Achse (A) in einer Bearbeitungs-Hochrichtung (z) ausgerichtet ist, so dass die Statorgehäuse-Fügeflächen (59) zur Anbindung an das Getriebegehäuse (25), insbesondere Zwischengehäuse (27), auf der Statorgehäuse-Oberseite positioniert sind,
- einem Zustell-Prozessschritt, in dem das Getriebegehäuse (25), insbesondere Zwischengehäuse (27), in einer vertikalen Zustellbewegung von oben nach unten auf die Statorgehäuse-Fügeflächen (59) gesetzt wird, und
- einem Schraub-Prozessschritt, in dem der Schraubbolzen (35) in einer vertikalen Fügerichtung von oben nach unten in die Schraubstelle (S1) zwischen Statorgehäuse (23) und Getriebegehäuse (25), insbesondere Zwischengehäuse (27), eingeschraubt wird.

7. Verfahren nach Anspruch 6, **dadurch gekennzeichnet, dass** im weiteren Prozessverlauf
- ein zweiter Zustell-Prozessschritt, in dem der Gehäusedeckel (29) in einer vertikalen Zustellbewegung von oben nach unten auf Zwischengehäuse-Fügeflächen (61) gesetzt wird, und
- ein zweiter Schraub-Prozessschritt folgt, in dem der Schraubbolzen (45) in einer vertikalen Fügerichtung von oben nach unten in die Schraubstelle (S2) zwischen Gehäusedeckel (29) und Zwischengehäuse (27) eingeschraubt wird.

## Claims

1. Drive device for a vehicle axle of a vehicle, having an electric machine (EM) which outputs to output shafts (5, 7) via a gearbox (1, 3), which output shafts each lead to a vehicle wheel (9),
wherein a cylindrical stator housing (23) of the electric machine (EM) is elongated in the axial direction by a gearbox housing (25),
wherein at least one screw point (S1) between the stator housing (23) and the gearbox housing (25) has a threaded bolt (35), which is guided through a non-threaded screw hole (37) of the gearbox housing (25) and is in threaded engagement with an internally threaded bore (39) formed on the stator housing (23),
**characterized in that**
the non-threaded screw hole (37) of the gearbox housing (25) leads into the gearbox-housing interior, so that the bolt head (43) of the threaded bolt (35) is arranged in the gearbox-housing interior in the assembled state.

2. Drive device according to Claim 1, **characterized in that** the stator housing (23) and the gearbox housing (25) are screwed together at a joining plane (F) at which a stator-housing side (31) crosses over into a gearbox-housing side (33), and **in that**, in particular, the bolt head (43) of the threaded bolt (35) has a tool application point, which is located on the gearbox-housing side (33) so that a tool access to the threaded bolt (35) is located on the gearbox-housing side (33).

3. Drive device according to either of the preceding claims, **characterized in that** the gearbox housing (25) is composed of two housing parts (27, 29), which are arranged one behind the other in an axial direction, in particular of an intermediate housing (27) and a housing cover (29) which closes the gearbox-housing interior in the axial direction.

4. Drive device according to Claim 3, **characterized in that** the intermediate housing (27) and the housing cover (29) are screwed together at at least a second screw point (S2) and **in that** the second screw point (S2) has a threaded bolt (45), which is guided through a non-threaded screw hole (47) of the housing cover (29) and is in threaded engagement with an internally threaded bore (49) formed on the intermediate housing (27), so that, in particular, an opening edge region (51) of the housing-cover screw hole (47) is braced between a bolt head (53) of the threaded bolt (45) and the intermediate housing (27).

5. Drive device according to one of the preceding claims, **characterized in that** the internally threaded bore (39, 49) is formed as a blind hole with a closed bore base, and/or **in that** the screw axis of the first screw point (S1) and/or the screw axis of the second screw point (S2) are aligned axially parallel to the stator-housing axis (A), and/or **in that** the joining direction of the threaded bolt (35) at the first screw point (S1) and the threaded bolt (45) at the second screw point (S2) are identical.

6. Method for assembling a drive device according to one of the preceding claims, having
- a providing process step, in which the still empty stator housing (23) is provided and is equipped with electric-machine components (55, 57), wherein the stator-housing axis (A) is aligned in a vertical processing direction (z) so that the stator-housing joining faces (59) for connection to the gearbox housing (25), in particular the intermediate housing (27), are positioned on the stator-housing upper side,
- a feed process step, in which the gearbox housing (25), in particular the intermediate housing (27), is placed on the stator-housing joining faces (59) in a vertical feed motion from above downwards, and
- a screw process step, in which the threaded bolt (35) is screwed into the screw point (S1) between the stator housing (23) and the gearbox housing (25), in particular the intermediate housing (27), in a vertical joining direction from above downwards.

7. Method according to Claim 6, **characterized in that,** in the further process sequence, there follows
- a second feed process step, in which the housing cover (29) is placed on intermediate joining faces (61) in a vertical feed motion from above downwards, and
- a second screw process step, in which the threaded bolt (45) is screwed into the screw point (S2) between the housing cover (29) and the intermediate housing (27) in a vertical joining direction from above downwards.

## Revendications

1. Dispositif d'entraînement pour un essieu d'un véhicule, comportant une machine électrique (EM) qui, par le biais d'une transmission (1, 3), entraîne des arbres de sortie (5, 7) qui mènent respectivement à une roue de véhicule (9),
un carter de stator (23) cylindrique de la machine électrique (EM) étant prolongé dans la direction axiale par un carter de transmission (25),
au moins un point de vissage (S1) entre le carter de stator (23) et le carter de transmission (25) présentant un boulon fileté (35) qui est guidé à travers un trou de vissage (37) dépourvu de filetage du carter de transmission (25) et est en prise par filetage avec un alésage à filetage intérieur (39) réalisé sur le carter de stator (23),
**caractérisé en ce que** le trou de vissage (37) dépourvu de filetage du carter de transmission (25) débouche dans l'espace intérieur de carter de transmission, de sorte que, dans l'état assemblé, la tête de boulon (43) du boulon fileté (35) soit disposée dans l'espace intérieur de carter de transmission.

2. Dispositif de transmission selon la revendication 1, **caractérisé en ce que** le carter de stator (23) et le carter de transmission (25) sont vissés l'un sur l'autre au niveau d'un plan de jonction (F) au niveau duquel un côté carter de stator (31) se prolonge par un côté carter de transmission (33), et **en ce qu'**en particulier la tête de boulon (43) du boulon fileté (35) présente un point d'application d'outil qui se trouve sur le côté carter de transmission (33), de sorte qu'un accès d'un outil au boulon fileté (35) se trouve sur le côté carter de transmission (33).

3. Dispositif d'entraînement selon l'une des revendications précédentes, **caractérisé en ce que** le carter de transmission (25) est composé de deux parties de carter (27, 29) qui sont disposées l'une derrière l'autre dans la direction axiale, et en particulier d'un carter intermédiaire (27) et d'un couvercle de carter (29) qui ferme l'espace intérieur de carter de transmission dans la direction axiale.

4. Dispositif d'entraînement selon la revendication 3, **caractérisé en ce que** le carter intermédiaire (27) et le couvercle de carter (29) sont vissés l'un sur l'autre au niveau d'au moins un deuxième point de vissage (S2), et **en ce que** le deuxième point de vissage (S2) présente un boulon fileté (45) qui est guidé à travers un trou de vissage (47) dépourvu de filetage du couvercle de carter (29) et est en prise par filetage avec un alésage à filetage intérieur (49) réalisé sur le carter intermédiaire (27), de sorte qu'en particulier une région de bord d'ouverture (51) du trou de vissage de couvercle de carter (47) soit serrée entre une tête de boulon (53) du boulon fileté (45) et le carter intermédiaire (27).

5. Dispositif d'entraînement selon l'une des revendications précédentes, **caractérisé en ce que** l'alésage à filetage intérieur (39, 49) est réalisé sous la forme d'un trou borgne doté d'une base d'alésage fermée, et/ou **en ce que** l'axe de vissage du premier point de vissage (S1) et/ou l'axe de vissage du deuxième point de vissage (S2) sont orientés de manière axialement parallèle à l'axe de carter de stator (A), et/ou **en ce que** la direction de jonction du boulon fileté (35) au niveau du premier point de vissage (S1) et du boulon fileté (45) au niveau du deuxième point de vissage (S2) sont identiques.

6. Procédé d'assemblage d'un dispositif d'entraînement selon l'une des revendications précédentes, comportant
- une étape de processus de fourniture, dans laquelle le carter de stator (23) encore vide est fourni et est équipé de composants de machine électrique (55, 57), l'axe de carter de stator (A) étant orienté dans une direction verticale de traitement (z), de sorte que les surfaces de jonction de carter de stator (59) servant à la connexion au carter de transmission (25), en particulier au carter intermédiaire (27), soient positionnées sur le côté supérieur de carter de stator,
- une étape de processus d'avance, dans laquelle le carter de transmission (25), en particulier le carter intermédiaire (27), est placé sur les surfaces d'assemblage de carter de stator (59) du haut vers le bas dans un mouvement d'avance vertical, et
- une étape de processus de vissage, dans laquelle le boulon fileté (35) est vissé dans le point de vissage (S1) entre le carter de stator (23) et le carter de transmission (25), en particulier le carter intermédiaire (27), dans une direction de jonction verticale du haut vers le bas.

7. Procédé selon la revendication 6, **caractérisé en ce que**, lors du déroulement ultérieur du processus, il s'ensuit
- une deuxième étape de processus d'avance, dans laquelle le couvercle de carter (29) est placé sur des surfaces de jonction de carter intermédiaire (61) dans un mouvement d'avance vertical du haut vers le bas, et
- une deuxième étape de processus de vissage, dans laquelle le boulon fileté (45) est vissé dans le point de vissage (S2) entre le couvercle de carter (29) et le carter intermédiaire (27) dans une direction de jonction verticale du haut vers le bas.
